Europäisches Patentamt

European Patent Office

Office européen des brevets

(11) Veröffentlichungsnummer: **0 207 404 B1**

# (12) EUROPÄISCHE PATENTSCHRIFT

(45) Veröffentlichungstag der Patentschrift: **27.03.91**

(51) Int. Cl.⁵: **B60S 1/34**

(21) Anmeldenummer: **86108445.7**

(22) Anmeldetag: **20.06.86**

(54) **Scheibenwischeranlage.**

(30) Priorität: **02.07.85 DE 3523546**

(43) Veröffentlichungstag der Anmeldung:
**07.01.87 Patentblatt 87/02**

(45) Bekanntmachung des Hinweises auf die
Patenterteilung:
**27.03.91 Patentblatt 91/13**

(84) Benannte Vertragsstaaten:
**FR GB IT SE**

(56) Entgegenhaltungen:
**DE-A- 1 505 403      DE-A- 3 228 087**
**DE-A- 3 428 710      DE-A- 3 707 837**
**DE-U- 8 519 114      FR-A- 2 502 564**
**FR-A- 2 544 677**

(73) Patentinhaber: **SWF Auto-Electric GmbH**
**Stuttgarter Strasse 119 Postfach 135**
**W-7120 Bietigheim-Bissingen(DE)**

(72) Erfinder: **Bauer, Kurt**
**Wolfsgrubenstrasse 21**
**W-7121 Ingersheim 2(DE)**
Erfinder: **Bienert, Herbert**
**Ahornweg 15**
**W-7122 Besigheim(DE)**
Erfinder: **Egner-Walter, Bruno**
**Käferflugstrasse 43**
**W-7100 Heilbronn(DE)**
Erfinder: **Schmid, Eckhardt**
**Heilbronner Strasse 62**
**W-7129 Brackenheim(DE)**
Erfinder: **Tietz, Volker**
**Gutenbergstrasse 26**
**W-7100 Heilbronn(DE)**

## Beschreibung

Die Erfindung bezieht sich auf eine Scheibenwischeranlage gemäß den Merkmalen des Oberbegriffs des Anspruchs 1.

In der DE-A-33 14 456 FR-A-2544677 ist eine Scheibenwischeranlage dieser Art beschrieben, bei der zur Verstellung des Anpreßdruckes des Wischblattes in einer Bohrung der Wischerwelle ein Stellglied in Form einer Verstellstange geführt ist, die elektromotorisch antreibbar ist und während der Verstellbewegung über einen Hebel den Einhängepunkt einer Anpreßdruckfeder des Wischarms verändert. Das über einen elektromotorischen Stellantrieb antreibbare Stellglied ist abschnittsweise als Zahnstange ausgebildet, die mit einem Ritzel kämmt. Das Stellglied ist dabei einstückig ausgeführt und reicht vom Getriebegehäuse des Stellantriebes durch die Wischerwelle hindurch bis zu dem Angriffspunkt an dem Hebel, an dem die Anpreßdruckfeder eingehängt ist.

Dieser Verstellmechanismus nimmt verhältnismäßig viel Raum in Anspruch und hat keinen guten Wirkungsgrad, so daß sich keine ausreichend schnellen Verstellzeiten erreichen lassen.

Aus der DE-A-15 05 403 ist eine Scheibenwischeranlage bekannt, bei der die Kraft für den Anpreßdruck des Wischblatts auf die Fahrzeugscheibe innerhalb der Fahrzeugkarosserie hinter der Wischerwelle erzeugt und über ein Stellglied, bestehend aus einem Stößel, einer Einstellmutter, einer Kugel und einer durch die hohle Wischerwelle geführten Verstellstange, auf das Gelenkteil des Wischarms weitergeleitet wird. Während des Betriebs kann sich die Verstellstange gegenüber dem Wischarm verdrehen.

Die FR-A-25 02 564 zeigt eine Scheibenwischeranlage mit einer Wischerwelle, die eine radial nach außen offene Längsnut besitzt, in der ein dreiteiliges Stellglied geführt ist, das axial verstellt werden kann. Der Verstellhub des Stellglieds wird auf einen Hebel übertragen, der am Befestigungsteil eines Wischarms schwenkbar gelagert ist und an den ein zwischen Befestigungsteil und Gelenkteil des Wischarms wirkendes Federelement eingehängt ist. Im Betrieb der Scheibenwischeranlage machen alle Teile des Stellglieds die Pendelbewegung der Wischerwelle und des Wischarms mit.

Der Erfindung liegt die Aufgabe zugrunde, eine Scheibenwischeranlage der eingangs erwähnten Art so weiterzubilden, daß mit einem verhältnismäßig leistungsarmen Motor kurze Verstellzeiten erreicht werden, wobei der Verstellmechanismus einen kompakten Aufbau und einen hohen Wirkungsgrad aufweisen soll. Außerdem soll die Funktionsfähigkeit auch nach längerer Betriebszeit gewährleistet sein.

Diese Aufgabe wird erfindungsgemäß mit den kennzeichnenden Merkmalen des Anspruchs 1 gelöst.

Aufgrund der mehrteiligen Ausführung des Stellglieds gemäß der vorliegenden Erfindung mit einer auf den Hebel einwirkenden Verstellstange und einem zum Stellantrieb gehörenden Stößel werden mögliche Reibungsverluste auf ein Minimum gesenkt, denn kurze Abschnitte können ohne großen Aufwand leichtgängig, aber doch spielfrei geführt werden.

Da die Verstellstange drehfest mit der Wischerwelle gekoppelt ist, kann an der Abstützfläche zwischen Hebel und Stirnseite der Verstellstange keine Abnützung mehr aufgrund einer relativen Drehbewegung auftreten. Vielmehr ist diese hochbeanspruchte Abstützfläche nunmehr in die Bohrung der Wischerwelle verlagert, wo sie außerdem gegen Fremdeinflüsse geschützt ist und dauerhaft eingefettet werden kann, so daß mit guten Laufeigenschaften ohne Verschleiß auch nach längerer Betriebszeit gerechnet werden kann.

Die Verstellstange, die auf den Hebel einwirkt, durchsetzt axial nahezu die gesamte Wischerwelle, das Stellglied ist also gewissermaßen an der Schnittstelle zwischen dem Stellantrieb und der Wischerwelle geteilt. Diese Schnittstelle wird gewählt, weil man dann bei der Montage des Stellantriebs relativ zur Wischerwelle geringe Abweichungen von der Sollage durchaus zulassen kann, ohne daß der Wirkungsgrad der Anlage wegen erhöhter Reibungsverluste zu stark abfällt.

Der Stößel ist im Gegensatz zur Verstellstange nicht mit der Wischerwelle bewegbar, sondern verdrehsicher angeordnet, so daß sein Verstellhub in einer eine kompakte Bauweise ermöglichenden Art über ein Schraubengetriebe aus der Drehbewegung eines Antriebsrads abgeleitet werden kann.

Vorteilhafte Ausgestaltungen einer erfindungsgemäßen Scheibenwischeranlage kann man den Unteransprüchen entnehmen.

Besonders bevorzugt wird eine Ausführung gemäß den Merkmalen des Anspruchs 2, weil durch ein flexibles Verbindungselement zwischen dem Stößel und der Verstellstange Fluchtungsfehler und Neigungsfehler zwischen Stößel und Verstellstange ausgeglichen werden können. Unter einem flexiblen Verbindungselement wird dabei ganz allgemein ein Element verstanden, das bestimmte relative Verstellbewegungen zwischen beiden leilen zuläßt. Ein starres Verbindungselement wäre im vorliegenden Fall nicht geeignet, weil dies beispielsweise keine Fluchtungsfehler kompensieren könnte und somit der Nachteil der bekannten Ausführung hinsichtlich der erhöhten Reibungsverluste nicht behoben wäre.

Eine besonders kompakte Ausführung des Stellantriebs mit kleinen Abmessungen ist möglich, wenn der Stößel drehfest mit einem Gewindeabschnitt mit einem Außengewinde verbunden wird, der zentral in einer Gewindehülse angeordnet und mit dem Innengewinde dieser Gewindehülse kämmt, wobei diese Gewindehülse drehfest mit dem Antriebsrad verbunden ist, insbesondere in dieses integriert ist. Durch die Verlagerung des Schraubengewindes innerhalb des Schneckenrades wird insbesondere die Baulänge in Verstellrichtung gegenüber anderen denkbaren Ausführungen wesentlich reduziert.

Die Erfindung und deren vorteilhafte Ausgestaltungen werden nachstehend anhand der in der Zeichnung dargestellten Ausführungsbeispiele näher erläutert. Es zeigen:

Fig. 1    einen Schnitt durch Stellantrieb, Wischerwelle und Wischarm einer Wischeranlage,

Fig. 2    drei unterschiedliche Teilschnitte durch die Wischerwelle,

Fig. 3    in vergrößertem Maßstab schematisch einen Teilschnitt im Bereich der Verbindung zwischen Hebel und Verstellstange und

Fig. 4    einen Teilschnitt entlang der Schnittlinie III durch den Hebel am Wischarm.

Zu dem mit 10 bezeichneten Wischarm gehört ein Befestigungsteil 11 und ein schwenkbar daran angelenktes Gelenkteil 12, an dem eine Wischstange 13 fixiert ist. Am Befestigungsteil 11 ist schwenkbar ein Hebel 15 gelagert, an dessen einem Ende ein C-Bügel 16 eingehängt ist. Als Federelement zur Erzeugung des notwendigen Anpreßdruckes zwischen dem nicht dargestellten Wischblatt und der zu reinigenden Scheibe dient eine Anpreßdruckfeder 17, die in bekannter Weise einerseits an der Wischstange 13 und andererseits an den C-Bügel 16 eingehängt ist. Der von dieser Anpreßdruckfeder 17 erzeugbare Anpreßdruck ist einstellbar. Wird der Hebel 15 in die gestrichelt angedeutete Position verschwenkt, wird der Anpreßdruck in bekannter Weise erhöht.

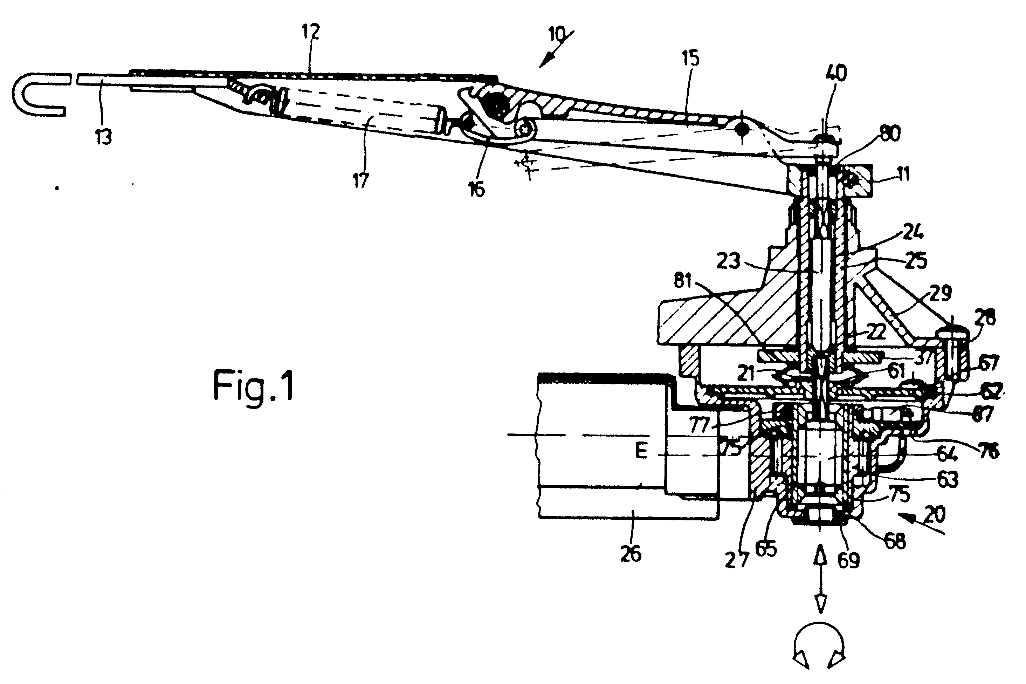

Die Einstellung des Anpreßdruckes erfolgt über einen insgesamt mit 20 bezeichneten Stellantrieb. Zu diesem Stellantrieb 20 gehört ein Stößel 21, der in Achsrichtung verschiebbar, aber ansonsten drehfest geführt ist. Der verstellhub dieses Stößels 21 wird über ein Verbindungselement 22 in Form einer Buchse auf eine Verstellstange 23 übertragen, die in einer Bohrung 24 einer Wischerwelle 25 axial verschiebbar gelagert ist. Diese Verstellstange 23 wirkt auf das freie Ende des Hebels 15, wie dies in Fig. 1 angedeutet ist.

Aus dieser Beschreibung und der zugehörigen Zeichnung geht also hervor, daß erfindungsgemäß das Stellglied zwischen dem Stellantrieb 20 und dem Hebel 15 mehrteilig ausgebildet ist. Im vorliegenden Fall gehört dazu die Verstellstange 23 und der Stößel 21, die über das flexible Verbindungselement 22 miteinander gekoppelt sind. Bevor nun im einzelnen die Bedeutung des flexiblen Verbindungselementes 22 und die zweiteilige Ausführung des Stellgliedes näher erläutert wird, wird kurz darauf hingewiesen, daß zu dem Stellantrieb 20 ein Elektromotor 26 und ein Getriebegehäuse 27 gehört, das über Schraubverbindungen 28 mit der Lagerbuchse 29 an die Lagerbuchse 29 für die Wischerwelle 25 angeflanscht wird. Beim Musterbau derartiger Wischeranlagen hat sich gezeigt, daß die vorgeschriebene Lage dieser Baueinheit aus Elektromotor 26 und Getriebegehäuse 27 relativ zur Lagerbuchse 29 nur bei Anwendung besonderer Sorgfalt exakt genug eingehalten werden kann. Normalerweise ist jedoch mit Verschiebungen aufgrund unvermeidlicher Toleranzen zu rechnen, so daß nicht sichergestellt werden kann, daß die Achse des Stößels 21 genau mit der Wischerwelle 25 fluchtet. Die unvermeidlichen Fluchtungs- und Neigungsfehler werden jedoch durch die nachfolgend beschriebenen Maßnahmen ausgeglichen.

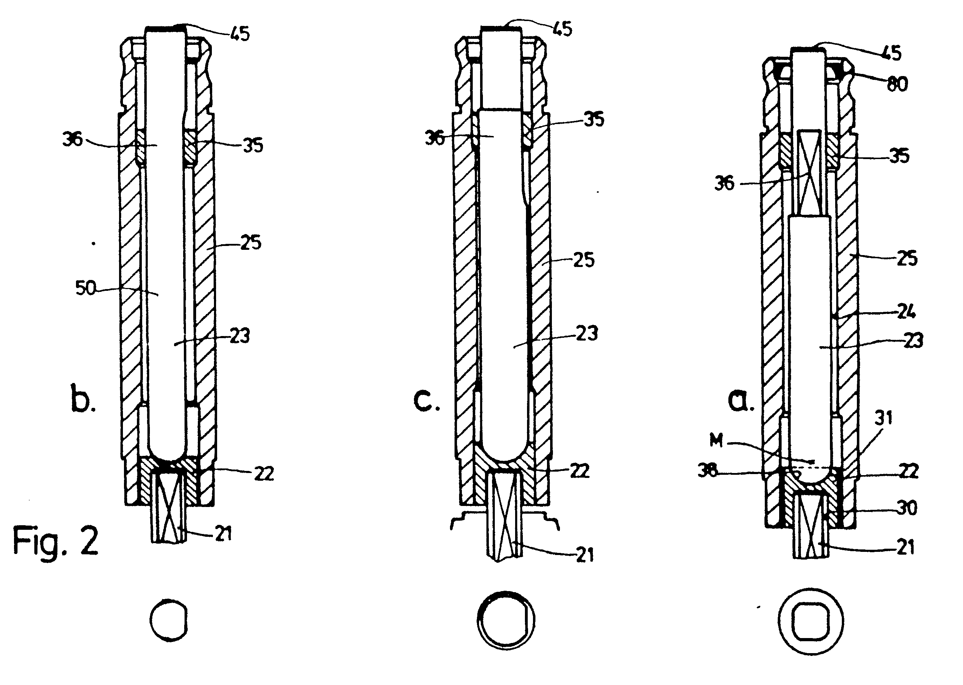

Die als flexibles Verbindungselement anzusehende Buchse 22 hat - wie genauer aus Fig. 2a hervorgeht - auf der einen Seite eine Aufnahme 30 für das Ende des Stößels 21. Das Stößelende hat einen Vierkant-Querschnitt, der passend in dieser Aufnahme 30 sitzt, so daß diese Buchse 22 verdrehfest mit dem Stößel 21 gekoppelt ist. Auf der anderen Seite hat diese Buchse 22 eine kugelkalottenförmig ausgebildete Aufnahme 31 für den entsprechend ballig geformten Endabschnitt der Verstellstange 23.

In Fig. 2 ist angedeutet, daß der Mittelpunkt M des balligen Abschnittes bzw. der Kugelkalotte außerhab der Buchse 22 liegt, so daß zwischen der Verstellstange 23 und dieser Buchse 22 eine Ausgleichsschwenkbewegung möglich ist. Bei einer sich konisch erweiternden Kalotte wäre dies natürlich nicht notwendig. Außerdem können Winkelfehler dadurch ausgeglichen werden, daß die Buchse 22 mit seitlichem Spiel in der Bohrung 24 der Wischerwelle 25 verschiebbar geführt ist. Wesentlich für eine hohe Dauerlauffestigkeit ist, daß dieses flexible Verbindungselement, nämlich die Buchse 22 innerhalb der Bohrung 24 der Wischerwelle 25 angeordnet ist. Wichtig ist außerdem, daß diese Buchse 22 nahe dem dem Wischarm 10 gegenüberliegenden Ende der Wischerwelle 25 angeordnet ist, so daß der zum Stellantrieb 20 gehörende Stößel 21 nur geringfügig in die Bohrung 24 der Wischerwelle 25 eintaucht. Nahe dem wischarmseitigen Ende der Wischerwelle 25 ist in die Bohrung 24 eine Führungsbuchse 35 eingepreßt. Die Verstellstange 23 hat in dem in dieser Führungsbuchse 35 geführten Abschnitt 36 einen von einer Kreisform abweichenden Querschnitt, im vorliegenden Ausführungsbeispiel ein Vierkantprofil und der Querschnitt der Lagerfläche dieser Führungsbuchse 35 ist dem Querschnitt der Verstellstange 23 angepaßt. Auf diese Weise ist die Verstellstange 23 drehfest mit der Wischerwelle 25 gekoppelt. Beim pendelnden Antrieb der Wischerwelle 25 über die in Fig. 1 angedeutete Kurbel 37 pendelt also die Verstellstange 23 ebenfalls, während der Stößel 21 und damit auch die drehfest damit verbundene Buchse 22 stillsteht. Folglich ergibt sich eine Reibung an der Abstützfläche 38 zwischen dem balligen Endabschnitt der Verstellstange 23 und der kalottenförmigen Aufnahme 31 an der Buchse 22. An dieser Stelle können aber die Reibungsverluste auf ein Minimum beschränkt werden und eine unzulässige Beanspruchung dieser Abstützfläche 38 ist nicht zu erwarten. Diese Abstützfläche 38 ist nämlich gegen Umwelteinflüsse geschützt innerhalb der Bohrung 24 der Wischerwelle 25 angeordnet. Eine Korrosion ist an dieser Stelle nicht zu befürchten, weil diese Bohrung 24 - wie dies später noch beschrieben wird - beidseitig abgedichtet ist. Außerdem sind keine hohen Reibungsverluste zu erwarten, weil in diese Bohrung und damit in den Bereich der Abstützfläche 38 Fett eingebracht werden kann. Schließlich ist aufgrund der balligen Ausbildung des Endabschnitts der Verstellstange 23 eine große Abstützfläche 38 gegeben. Alle diese Maßnahmen beeinflussen die Dauerlauffestigkeit des Verstellmechanismus positiv.

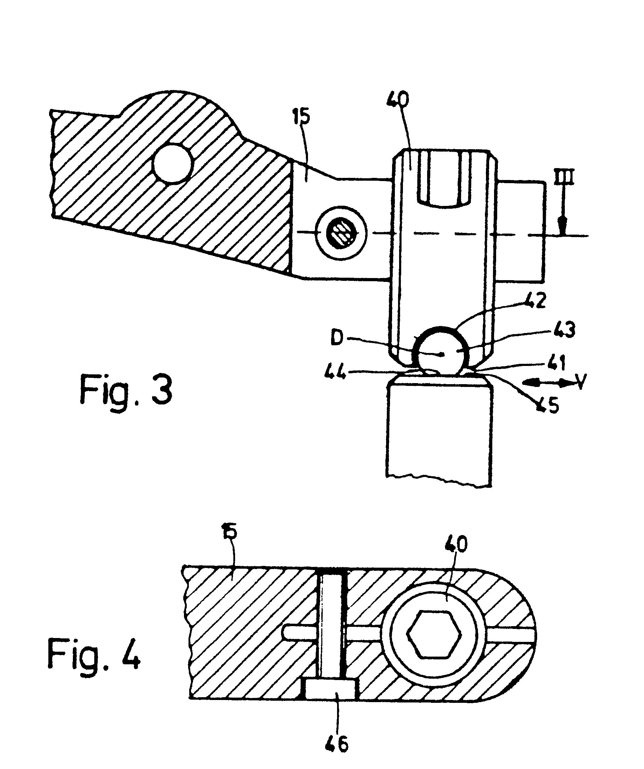

Aus den Fig. 3 und 4 geht hervor, daß an dem Hebel 15 eine Einstellschraube 40 zur genauen Einstellung bzw. Nachstellung des Anpreßdruckes fixiert ist, in deren Stirnfläche 41 eine Kalotte 42 eingearbeitet ist, in der ein Abstützkörper 43 in Form eines Kugelabschnittes beweglich gelagert ist. Die plane Abstützfläche 44 liegt auf der Stirnfläche 45 der Verstellstange 23 auf. Fig. 4 zeigt, daß der Endbereich dieses Hebels 15 geschlitzt ist und die beiden Teile mittels einer Schraube 46 gegeneinander gespannt werden können und damit die Einstellschraube 40 fixieren. Wesentlich bei dieser Ausführung ist, daß der Abstützkörper 43 in seiner kalottenförmigen Aufnahme 42 beweglich gelagert ist. Dann ist nämlich gewährleistet, daß sich bei einer Änderung der Stellung des Hebels 15 relativ zum Befestigungsteil des Wischarms der Abstützkörper 43 selbsttätig derart ausrichtet, daß dessen Abstützfläche 44 bündig auf der Stirnfläche 45 aufliegt. Wegen der großen Abstützfläche ist dann eine geringe Flächenpressung zu verzeichnen, so daß auch kaum mit einem Verschleiß zu rechnen ist, wenn bei einem Verstellvorgang des Hebels 15 diese Abstützfläche 44 in Pfeilrichtung V geringfügig auf der Stirnfläche 45 der Verstellstange 23 linear verschoben wird. Damit kann mit einer hohen Verstellgenauigkeit auch nach langer Betriebszeit gerechnet werden. Theoretisch könnte man den Abstützkörper 43 lose in die kalottenförmige Aufnahme 42 einlegen. Zur Montageerleichterung wird dieser Abstützkörper aber in der Aufnahme 42 verrastet, was daraus ersichtlich ist, daß der Dreh- und Mittelpunkt D des Abstützkörpers nun innerhalb der Klemmschraube 40 liegt.

Im folgenden sollen nun kurz die Unterschiede zwischen den Ausführungen gemäß den Fig. 2a bis 2c erläutert werden:

Bei der Ausführung nach Fig. 2b ist der Querschnitt der Verstellstange 23 in dem Abschnitt 50 zwischen der Führungsbuchse 35 und der auf dem Stößel 21 abgestützten Buchse 22 nicht größer als im Bereich des Führungsabschnittes 36. Folglich kann diese Verstellstange 23 ohne Probleme von der Wischarmseite her in die Bohrung der Wischerwelle 24 eingesetzt werden. Außerdem hat diese Verstellstange ein Einflach-Profil, wie das in der Zeichnung angedeutet ist. Bei dem Ausführungsbeispiel nach Fig. 2c ist der Querschnitt der Verstellstange 23 in dem Abschnitt 50 zwischen der Führungsbuchse 35 und der auf dem Stößel 21 abgestützten Buchse 22 dagegen größer als in Bereich des Führungsabschnittes 36. Diese Verstellstange muß daher von der Antriebsseite her in die Bohrung 24 der Wischerwelle 25 eingesetzt werden. Entsprechendes gilt auch für die Ausführung gemäß Fig. 2a. Diese Ausführungen haben den Vorteil, daß während des Transports der Wischeranlage, bei der üblicherweise der Wischarm noch nicht auf der Wischerwelle fixiert ist, die Verstellstange nicht aus der Wischerwelle herausgleiten kann.

Im folgenden wird nun anhand vom Fig. 1 der Aufbau des Stellantriebs 20 näher beschrieben, der sich durch einen besonders kompakten Aufbau bei gutem Wirkungsgrad auszeichnet. Der Stößel 21 hat einen von einer Kreisform abweichenden Querschnitt, nämlich ein Vierkantprofil, der einen entsprechenden Durchbruch 61 in einem das Getriebegehäuse 27 abschließenden Deckel 62 durchsetzt. Der Stößel 21 ist also verdrehsicher geführt. Sein Verstellhub wird über ein Schraubengetriebe aus der umkehrbaren Drehbewegung eines Antriebsrades 63 abgeleitet, das in nicht näher dargestellter Weise mit einer Schnecke kämmt, die von dem Elektromotor 26 angetrieben wird. In Fig. 1 ist angedeutet, daß mit diesem Stößel 21 ein im Durchmesser größerer Gewindeabschnitt 64 drehfest, im vorliegenden Fall einstückig verbunden ist, der ein Außengewinde aufweist. In eine Bohrung des Antriebsrades 63 ist eine Gewindehülse 65 eingepreßt, die ein Innengewinde aufweist, das mit dem Gewindeabschnitt 64 kämmt. Wesentlich bei dieser Ausführung ist, daß diese Gewindehülse 65 drehfest in das Antriebsrad 63 integriert ist und vorzugsweise symmetrisch zur Mittelebene E dieses Antriebsrades 63 angeordnet ist. Bei einer Drehbewegung des Antriebsrades 63 verschiebt sich damit der Gewindeabschnitt 64 und damit auch der Stößel 21 axial innerhalb dieses Antriebsrades 63, so daß durch die notwendige axiale Ausdehnung dieses Antriebsrades die Bauhöhe des Stellantriebes 20 nicht vergrößert wird.

Der Deckel 62 ist mittels der Schraubverbindungen 67 in unterschiedlichen Winkelstellungen relativ zum Getriebegehäuse 27 an dessen Flansch festklemmbar. Nach dem Lösen dieser Schraubverbindungen 67 kann der Stößel 21 zusammen mit dem Deckel 62 verdreht und somit seine Grundeinstellung justiert werden. Dazu ist am Getriebegehäuse 27 in Achsrichtung des Stößels 21 eine Öffnung 68 vorgesehen, die durch eine Verschlußkappe 69 verschließbar ist. In diese Öffnung kann ein Werkzeug eingeführt werden, das in einen Schlitz am Gewindeabschnitt 64 zur Übertragung einer Drehbewegung auf den Stößel 21 hineingleiten kann. Damit ist eine Verstellmöglichkeit für den Stößel auch dann gegeben, wenn die gesamte Baueinheit bereits an den Montagerahmen bzw. das Wischlager angeschraubt ist, denn die Schrauben 67 zum Festklemmen des Deckels sind dann immer noch zugänglich.

Aus Fig. 1 ist weiter ersichtlich, daß das Antriebsrad 63 beidseitig je einen zylindrischen Ansatz 75 aufweist. Der eine Ansatz sitzt in einer entsprechenden Lagerbohrung im Getriebegehäuse. Der andere Ansatz sitzt in einer Lagerbohrung in einem Lagerschild 76, das drehfest im Getriebegehäuse 27 festgelegt ist. An einem über dem Lagerschild 76 hervorstehenden Abschnitt des Ansatzes 75 ist eine Nockenscheibe 77 drehfest fixiert. Über diese Nockenscheibe 77 wird ein Schalter 87 betätigt und damit einer nicht näher dargestellten Auswerteschaltung ein Signal zugeführt, aus dem der Verstellhub des Stößels abgeleitet werden kann. Dieser Schalter 87 ist raumsparend zwischen dem Lagerschild 76 und dem Getriebegehäusedeckel 62 angeordnet und damit vor Umwelteinflüssen geschützt.

Abschließend wird noch darauf hingewiesen, daß die Bohrung 24 in der Wischerwelle 25 einerseits durch eine Dichtung 80 und andererseits durch einen Gummibalg 81 gedichtet wird, der sich an der Kurbel 37 zum Antrieb der Wischerwelle bzw. am Getriebegehäusedeckel 62 abstützt. Dieser Gummibalg 81 dichtet damit zugleich auch die Lagerfläche des Stößels 21 im Getriebegehäusedeckel 62 ab.

## Ansprüche

1. Scheibenwischeranlage, insbesondere für Kraftfahrzeuge mit einem Wischarm (10) mit einem an einer Wischerwelle (25) fixierten Befestigungsteil (11), einem daran angelenkten Gelenkteil (12) sowie einem zwischen dem Befestigungsteil (11) und dem Gelenkteil (12) wirkenden Federelement (17), wobei der von dem Federelement (17) hervorgerufene Anpreßdruck für ein Wischblatt durch einen Stellantrieb (20) veränderbar ist, dessen Verstellhub über ein in einer Bohrung der Wischerwelle verschiebbares Stellglied auf einen Hebel (15) übertragen wird, der auf das Federelement (17) einwirkt, dadurch gekennzeichnet, daß das Stellglied mehrteilig ausgebildet ist und wenigstens einen zu dem Stellantrieb (20) gehörenden Stößel (21) sowie eine auf den Hebel (15) einwirkende Verstellstange (23) aufweist, daß die Verstellstange (23) drehfest mit der Wischerwelle (25) gekoppelt ist und die Wischerwelle (25) annähernd auf der gesamten Länge durchsetzt und daß der Stößel (21) des Stellantriebs (20) verdrehsicher geführt und der Verstellhub des Stößels (21) über ein Schraubengetriebe aus der Drehbewegung eines Antriebsrads (63) abgeleitet wird.

2. Scheibenwischeranlage nach Anspruch 1, dadurch gekennzeichnet, daß der Verstellhub des Stößels (21) über ein flexibles Verbindungselement (22) auf die Verstellstange übertragen wird.

3. Scheibenwischeranlage nach Anspruch 2, dadurch gekennzeichnet, daß das flexible Verbindungselement (22) innerhalb der Bohrung (24) der Wischerwelle (25) angeordnet ist.

4. Scheibenwischeranlage nach Anspruch 3, dadurch gekennzeichnet, daß das flexible Verbindungselement (22) nahe dem dem Wischarm (10) gegenüberliegenden Ende der Wischerwelle (25) innerhalb der Bohrung (24) angeordnet ist.

5. Scheibenwischeranlage nach Anspruch 4, dadurch gekennzeichnet, daß das Verbindungselement eine Buchse (22) ist, die auf der einen Seite eine Aufnahme (30) für das Ende des Stößels (21) und auf der anderen Seite eine Aufnahme (31) für das Ende der Verstellstange (23) aufweist, wobei die Aufnahme (31) für die Verstellstange (23) als Kugelkalotte ausgebildet ist, in die ein entsprechend ballig geformter Endabschnitt der Verstellstange (23) eingreift.

6. Scheibenwischeranlage nach Anspruch 5, dadurch gekennzeichnet, daß der Mittelpunkt (M) des balligen Abschnitts bzw. der Kugelkalotte außerhalb der Buchse (22) liegt und diese Buchse (22) mit seitlichem Spiel in der Bohrung (24) der Wischerwelle (25) verschiebbar gelagert ist.

7. Scheibenwischeranlage nach einem der vorhergehenden Ansprüche, dadurch gekennzeichnet, daß in die Bohrung (24) der Wischerwelle (25) eine Führungsbuchse (35) eingepreßt ist, in der die Verstellstange (23) drehfest geführt ist, wobei diese Führungsbuchse (35) vorzugsweise nahe dem wischerarmseitigen Ende der Wischerwelle (25) angeordnet ist.

8. Scheibenwischeranlage nach Anspruch 7, dadurch gekennzeichnet, daß die Verstellstange (23) wenigstens in dem in der Führungsbuchse (35) geführten Abschnitt (36) einen von einer Kreisform abweichenden Querschnitt aufweist und der Querschnitt der Lagerfläche der Führungsbuchse (35) diesem Querschnitt der Verstellstange (23) angepaßt ist.

9. Scheibenwischeranlage nach Anspruch 8, dadurch gekennzeichnet, daß der in der Führungsbuchse (35) geführte Abschnitt (36) der Verstellstange (23) ein Einflachprofil oder ein Mehrflachprofil, vorzugsweise ein Vierkantprofil aufweist.

10. Scheibenwischeranlage nach Anspruch 8 oder 9, dadurch gekennzeichnet, daß der Querschnitt der Verstellstange (23) in einem Abschnitt zwischen der Führungsbuchse (35) und der auf dem Stößel (21) abgestützten Buchse (22) größer ist als im Bereich des Führungsabschnittes (36).

11. Scheibenwischeranlage nach Anspruch 8 oder 9, dadurch gekennzeichnet, daß der Querschnitt der Verstellstange (23) in einem Abschnitt zwischen der Führungsbuchse (35) und der auf dem Stößel (21) abgestützten Buchse (22) nicht größer ist als im Bereich des Führungsabschnittes (36).

12. Scheibenwischeranlage nach einem der Ansprüche 1 bis 6, dadurch gekennzeichnet, daß die Buchse (22) verdrehfest mit dem Stößel (21) gekoppelt ist.

13. Scheibenwischeranlage nach wenigstens einem der vorhergehenden Ansprüche, dadurch gekennzeichnet, daß an dem Hebel (15) eine Einstellschraube (40) fixiert ist, in dessen der Verstellstange (23) zugewandter Stirnfläche (41) eine Kalotte (42) eingearbeitet ist, in der ein Abstützkörper (43) in Form eines Kugelabschnitts beweglich gelagert ist, dessen plane Abstützfläche (44) auf der Stirnfläche (45) der Verstellstange (23) aufliegt.

14. Scheibenwischeranlage nach Anspruch 13, dadurch gekennzeichnet, daß der Abstützkörper (43) beweglich in der Kalotte (42) in der Einstellschraube (40) verrastet ist.

15. Scheibenwischeranlage nach wenigstens einem der vorhergehenden Ansprüche, dadurch gekennzeichnet, daß der Stößel (21) einen von einer Kreisform abweichenden Querschnitt, vorzugsweise ein Vierkantprofil aufweist und verdrehsicher in einem entsprechenden Durchbruch (61) in einem das Getriebegehäuse (27) abschließenden Deckel (62) geführt ist.

16. Scheibenwischeranlage nach wenigstens einem der vorhergehenden Ansprüche, dadurch gekennzeichnet, daß der Stößel (21) drehfest mit einem Gewindeabschnitt (64) mit Außengewinde verbunden ist, der zentral in einer Gewindehülse (65) angeordnet ist und mit dem Innengewinde dieser Gewindehülse (65) kämmt, und daß diese Gewindehülse (65) drehfest mit dem Antriebsrad (63) verbunden, insbesondere in dieses integriert ist.

17. Scheibenwischeranlage nach Anspruch 16, dadurch gekennzeichnet, daß die Gewindehülse (65) vorzugsweise symmetrisch zur Mittelebene (E) des Antriebsrades (63) angeordnet ist.

18. Scheibenwischeranlage nach Anspruch 17, dadurch gekennzeichnet, daß das Antriebsrad (63) und die Gewindehülse (65) einstückig aus Kunststoff hergestellt sind.

19. Scheibenwischeranlage nach wenigstens einem der vorhergehenden Ansprüche, dadurch gekennzeichnet, daß der Deckel (62) des Getriebegehäuses (27) in unterschiedlichen Winkelstellungen relativ zum Getriebegehäuse (27) fixierbar ist und daß in Achsrichtung des Stößels (21) in das Getriebegehäuse (27) eine verschließbare Öffnung (68) eingearbeitet ist, durch die mittels eines Werkzeuges die Stellung des Stößels (21) voreingestellt werden kann.

20. Scheibenwischeranlage nach wenigstens einem der vorhergehenden Ansprüche, dadurch gekennzeichnet, daß das Antriebsrad (63) mit einem zylindrischen Ansatz (75) in einer Bohrung des Getriebegehäuses (27) und auf der anderen Seite mit einem zylindrischen Ansatz (75) in einer Bohrung eines im Getriebegehäuse (27) drehfest festgelegten Lagerschildes (76) drehbeweglich geführt ist, daß mit Abstand von dem Lagerschild (76) das Getriebegehäuse (27) durch einen Deckel (62) abgeschlossen ist und daß zwischen dem Lagerschild (76) und dem Deckel (62) innerhalb des Getriebegehäuses (27) ein elektrischer Schalter (78) angeordnet ist, der über eine drehfest mit dem zylindrischen Ansatz (75) am Antriebsrad (63) gekoppelten Nockenscheibe (77) betätigbar ist.

## Claims

1. A windscreen wiper system, especially for motor vehicles having a wiper arm (10) with a fastening member (11) fixed on a wiper shaft (25), a link (12) articulated on the said fastening member and a spring element (17) acting between fastening member (11) and link (12), wherein the contact pressure for a wiper blade produced by the spring element (17) is variable by an actuating drive (20) the adjusting stroke of which is transmitted onto a lever (15) via an actuator displaceable in a bore of the wiper shaft, which lever acts upon the spring element (17), characterised in that the actuator is formed of several parts and includes at least a tappet (21) being part of the actuating drive (20) and an adjusting rod (23) acting upon the lever (15), in that the adjusting rod (23) is coupled with the wiper shaft (25) in a manner protected against twisting and intersperses the wiper shaft approximately over its entire length and that the tappet (21) of the actuating drive (20) is guided in a manner protected against twisting and the adjusting stroke of the tappet (21) is derived from the rotation of a drive wheel (63) via a screw gear.

2. A windscreen wiper system according to claim 1, characterised in that the adjusting stroke of the tappet (21) is transmitted onto the adjusting rod via a flexible connecting element (22).

3. A windscreen wiper system according to claim 2, characterised in that the flexible connecting element (22) is arranged within the bore (24) of the wiper shaft (25).

4. A windscreen wiper system according to claim 3, characterised in that the flexible connecting element (22) is arranged within the bore (24) closely to the end of the wiper shaft (25) located opposite the wiper arm (10).

5. A windscreen wiper system according to claim 4, characterised in that the connecting element is a bush (22) which on one side has a receiver (30) for the end of the tappet (21) and a receiver (31) for the end of the adjusting rod (23) on the other side, wherein the receiver (31) for the adjusting rod (23) is formed as a universal ball joint, into which engages a correspondingly shaped crowned end portion of the adjusting rod (23).

6. A windscreen wiper system according to claim 5, characterised in that the centre (M) of the crowned portion or of the universal ball joint lies outside the bush (22) and the said bush (22) is displaceably mounted with lateral play in the bore (24) of the wiper shaft (25).

7. A windscreen wiper system according to one of the preceding claims, characterised in that into the bore (24) of the wiper shaft (25) a guide bush (35) is pressed, in which the adjusting rod (23) is guided in a manner protected against twisting, wherein the said guide bush (35) is preferably arranged closely to the end of the wiper shaft (25) facing the wiper arm.

8. A windscreen wiper system according to claim 7, characterised in that, at least in its portion (36) guided in the guide bush (35), the adjusting rod (23) has a cross-section differing from the shape of a circle and the cross-section of the bearing surface of the guide bush (35) is adapted to the said cross-section of the adjusting rod (23).

9. A windscreen wiper system according to claim 8, characterised in that the portion (36) of the adjusting rod (23) guided in the guide bush (35) has a unifacial flattenened profile or a multifacial flattened profile, preferably a four-edged profile.

10. A windscreen wiper system according to claim 8 or 9, characterised in that in a section between the guide bush (35) and the bush (22) supported on the tappet (21) the cross-section of the adjusting rod (23) is larger than in the area of the guide portion (36).

11. A windscreen wiper system according to claim 8 or 9, characterised in that in a section between the guide bush (35) and the bush (22) supported on the tappet (21) the cross-section of the adjusting rod (23) is not larger than in the area of the guide portion (36).

12. A windscreen wiper system according to one of claims 1 to 6, characterised in that the bush (22) is coupled with the tappet (21) in a manner protected against twisting.

13. A windscreen wiper system according to any one of the preceding claims, characterised in that on the lever (15) is fixed an adjusting screw (40), into the front face (41) of which a calotte (42) is worked in which a supporting body (43) in the shape of a spherical segment is movably mounted and the planar supporting face (44) of the latter rests upon the front face (45) of the adjusting rod (23.

14. A windscreen wiper system according to claim 13, characterised in that the supporting body (43) is movably locked in the calotte (42) in the adjusting screw (40).

15. A windscreen wiper system according to any one of the preceding claims, characterised in that the tappet (21) has a cross-section differing from the shape of a circle, preferably a four-edged profile, and is guided in a manner protected against twisting in a corresponding aperture (61) in a cap (62) covering the gear housing (27).

16. A windscreen wiper system according to any one of the preceding claims, characterised in that the tappet (21) is connected with a thread portion (64) having an external thread, which is centrally arranged in a thread sleeve (65) and meshes with the internal thread of the said thread sleeve (65), and that the said thread sleeve (65) is connected with the drive wheel (63) in a manner protected against twisting, especially is integrated into it.

17. A windscreen wiper system according to claim 16, characterised in that the thread sleeve (65) is preferably symmetrically arranged to the centre plane (E) of the drive wheel (63).

18. A windscreen wiper system according to claim 17, characterised in that the drive wheel (63) and the thread sleeve (65) are integrally made of plastic material.

19. A windscreen wiper system according to any one of the preceding claims, characterised in that the cap (62) of the gear housing (27) may be fixed in different angular positions relative to the gear housing (27) and that in the axial direction of the tappet (21) a closable opening (68) is worked into the gear housing (27), through which opening the position of the tappet (21) can be pre-adjusted by means of a tool.

20. A windscreen wiper system according to any one of the preceing claims, characterised in that the drive wheel (63) is rotatably guided in a bore of the gear housing (27) by means of a cylindric stud (75) and at the other side by means of a cylindric stud (75) in a bore of an endshield (26) secured in the gear housing (27) in a manner protected against twisting, that with a spacing from the endshield (76) the gear housing (27) is closed by a cap (62) and that between the endshield (76) and the cap (62) there is arranged a switch (78) within the gear housing (27), which switch is operable via a cam disk (77) coupled with the cylindric stud (75) on the drive wheel (63) in a manner protected against twisting.

**Revendications**

1. Système essuie-glace, notamment pour des véhicules automobiles, comprenant un bras d'essuie-glace (10), avec une partie de fixation (11) fixée à un arbre d'essuie-glace (25), une partie articulée (12) articulée à la partie de fixation et un élément de ressort (17) agissant entre la partie de fixation (11) et la partie articulée (12), la pression d'application d'un balai d'essuie-glace qui est produite par l'élément de ressort (17) pouvant être modifiée par un servo-entraînement (20) dont la course de réglage est transmise, par l'intermédiaire d'un organe de réglage pouvant coulisser dans un perçage de l'arbre d'essuie-glace, à un levier (15) qui agit sur l'élément de ressort (17), caractérisé en ce que l'organe de réglage est réalisé en plusieurs parties et présente au moins un poussoir (21) faisant partie du servo-entraînement (20) et une tige de réglage (23) agissant sur le levier (15), en ce que la tige de réglage (23) est couplée solidairement en rotation à l'arbre d'essuie-glace (25) et traverse l'arbre d'essuie-glace (25) approximativement sur toute sa longueur, et en ce que le poussoir (21) du servo-entraînement (20) est guidé sans possibilité de rotation et la course de réglage du poussoir (21) est dérivée, par l'intermédiaire d'une transmission à vis, du mouvement de rotation d'une roue d'entraînement (63).

2. Système essuie-glace selon la revendication 1, caractérisé en ce que la course de réglage du poussoir (21) est transmise à la tige de réglage par l'intermédiaire d'un élément de liaison flexible (22).

3. Système essuie-glace selon la revendication 2, caractérisé en ce que l'élément de liaison flexible (22) est disposé à l'intérieur du perçage (24) de l'arbre d'essuie-glace (25).

4. Système essuie-glace selon la revendication 3, caractérisé en ce que l'élément de liaison flexible (22) est disposé dans le perçage (24) à proximité de l'extrémité de l'arbre d'essuie-glace (25) qui est opposée au bras d'essuie-glace (10).

5. Système essuie-glace selon la revendication 4, caractérisé en ce que l'élément de liaison est une douille (22) qui présente sur un côté un logement (30) pour l'extrémité du poussoir (21) et sur l'autre côté un logement (31) pour l'extrémité de la tige de réglage (23), le logement (31) pour la tige de réglage (23) étant configuré en calotte sphérique, dans laquelle s'engage une partie terminale de forme convexe correspondante de la tige de réglage (23).

6. Système essuie-glace selon la revendication 5, caractérisé en ce que le centre (M) de la partie convexe ou encore de la calotte sphérique se trouve à l'extérieur de la douille (22) et cette douille (22) est montée coulissante avec un jeu latéral dans le perçage (24) de l'arbre d'essuie-glace (25).

7. Système essuie-glace selon l'une des revendications précédentes, caractérisé en ce qu'une douille de guidage (35), dans laquelle est guidée solidairement en rotation la tige de réglage (23), est emmanchée dans le perçage (24) de l'arbre d'essuie-glace (25), cette douille de guidage (35) étant disposée de préférence à proximité de l'extrémité de l'arbre d'essuie-glace (25) qui est située du côté du bras d'essuie-glace.

8. Système essuie-glace selon la revendication 7, caractérisé en ce que la tige de réglage (23) présente, au moins dans sa partie (36) guidée dans la douille de guidage (35), une section divergeant de la forme circulaire, et la section de la face de montage de la douille de guidage (35) est adaptée à cette section de la tige de réglage (23).

9. Système essuie-glace selon la revendication 8, caractérisé en ce que la partie (36) de la tige de réglage (23) qui est guidée dans la douille de guidage (35) présente un profil à une ou plusieurs faces planes, de préférence un profil 4 pans.

10. Système essuie-glace selon la revendication 8 ou 9, caractérisé en ce que la section de la tige de réglage (23), dans une partie située entre la douille de guidage (35) et la douille (22) appuyée sur le poussoir (21), est plus grande que dans la région de la partie de guidage (36).

11. Système essuie-glace selon la revendication 8 ou 9, caractérisé en ce que la section de la tige de réglage (23), dans une partie située entre la douille de guidage (35) et la douille (22) appuyée sur le poussoir (21), n'est pas plus grande que dans la région de la partie de guidage (36).

12. Système essuie-glace selon l'une des revendications 1 à 6, caractérisé en ce que la douille (22) est couplée au poussoir (21) sans possibilité de rotation.

13. Système essuie-glace selon au moins une des revendications précédentes, caractérisé en ce qu'une vis de réglage (40) est fixée sur le levier (15), et en ce que dans la face frontale (41) tournée vers la tige de réglage (23) de cette vis est ménagée une calotte (42) dans laquelle est monté avec possibilité de déplacement un corps d'appui (43) sous la forme d'un segment sphérique dont la face d'appui plane (44) repose sur la face frontale (45) de la tige de réglage (23).

14. Système essuie-glace selon la revendication 13, caractérisé en ce que le corps d'appui (43) est enclenché avec possibilité de déplacement dans la calotte (42) de la vis de réglage (40).

15. Système essuie-glace selon au moins une des revendications précédentes, caractérisé en ce que le poussoir (21) présente une section divergeant de la forme circulaire, de préférence un profil 4 pans, et est guidé sans possibilité de rotation dans un ajour correspondant (61) d'un couvercle (62) fermant le boîtier de transmission (27).

16. Système essuie-glace selon au moins une des revendications précédentes, caractérisé en ce que le poussoir (21) est assemblé solidairement en rotation à une partie filetée (64) à filetage extérieur, qui est disposée centralement dans une douille filetée (65) et qui engrène avec le filetage intérieur de cette douille filetée (65), et en ce que cette douille filetée (65) est assemblée solidairement en rotation à la roue d'entraînement (63), en étant notamment incorporée dans cette dernière.

17. Système essuie-glace selon la revendication 16, caractérisé en ce que la douille filetée (65) est disposée de préférence symétriquement par rapport au plan médian (F) de la roue d'entraînement (63).

18. Système essuie-glace selon la revendication 17, caractérisé en ce que la roue d'entraînement (63) et la douille filetée (65) sont réalisées en une pièce en matière plastique.

19. Système essuie-glace selon au moins une des revendications précédentes, caractérisé en ce que le couvercle (62) du boîtier de transmission (27) peut être fixé à différentes positions angulaires par rapport au boîtier de transmission (27) et en ce qu'une ouverture obturable (68), ménagée dans le sens axial du poussoir (21) dans le boîtier de transmission (27), permet, à l'aide d'un outil, de prérégler la position du poussoir (21).

20. Système essuie-glace selon au moins une des revendications précédentes, caractérisé en ce que la roue d'entraînement (63) est guidée mobile en rotation par un épaulement cylindrique (75) prévu dans un perçage du boîtier de transmission (27) et, de l'autre côté, par un épaulement cylindrique (75) prévu dans un perçage d'un flasque de montage (76) fixé solidairement en rotation dans le boîtier de transmission (27), en ce que le boîtier de transmission (27) est fermé à distance du flasque de montage (76) par un couvercle (62), et en ce qu'un commutateur électrique (87), disposé à l'intérieur du boîtier de transmission (27) entre le flasque de montage (76) et le couvercle (62), peut être actionné par un disque à came (77), couplé solidairement en rotation à l'épaulement cylindrique (75), de la roue d'entraînement (63).

Fig.1

EP 0 207 404 B1

Fig. 2

Fig. 3

Fig. 4